# EUROPEAN PATENT SPECIFICATION

(11) **EP 4 562 092 B1**
(45) Date of publication and mention of the grant of the patent: **09.09.2026**
(21) Application number: 23748725.1
(22) Date of filing: 21.07.2023
(51) Int. Cl.: C08G 63/183, C08J 5/18, C08L 67/02

(54) **BIODEGRADABLE FILM WITH A LACTIC ACID POLYESTER FLUIDISED WITH A NITROGEN COMPONENT**
BIOLOGISCH ABBAUBARE FOLIE MIT EINEM MILCHSÄUREPOLYESTER, DER MIT EINER STICKSTOFFKOMPONENTE FLUIDISIERT WIRD
FILM BIODÉGRADABLE COMPRENANT UN POLYESTER D'ACIDE LACTIQUE FLUIDISÉ À L'AIDE D'UN COMPOSANT D'AZOTE

(30) Priority: 27.07.2022 IT 202200015900
(43) Date of publication of application: 04.06.2025
(73) Proprietor: Novamont S.p.A., 28100 Novara (IT)
(72) Inventor: GESTÌ GARCIA, Sebastià, 10100 Torino (IT); INGUÌ, Pier Simone, 28100 Novara (IT); VALLERO, Roberto, 13040 Borgo D'Ale (VC) (IT)
(74) Representative: Zanoli, Enrico
(86) International application number: PCT/EP2023/070261
(87) International publication number: WO 2024/022965

(56) References cited:
- WO-A1-2013/038770
- WO-A2-2015/057694
- CN-A- 112 226 057
- US-A1- 2019 160 796

## Description

The present invention relates to a biodegradable film particularly suitable for use in the manufacture of various types of packaging, in particular bags for the transport of goods and bags for food packaging, such as bags for fruit and vegetables. Such films, in addition to having good mechanical properties, in particular a high elastic modulus, have particularly good optical transparency properties.

The production of packaging, in particular bags for food packaging such as fruit and vegetable bags, requires the use of films that combine good mechanical properties with other properties beneficial to consumers, such as, in particular, optical transparency properties that allow consumers to make use of the packaging to identify objects contained inside from the outside.

In the field of biodegradable packaging, in addition to mechanical and optical problems, there is also the need to make use of materials that are able to degrade once their primary use has come to an end without giving rise to an accumulation of waste in the environment.

The development of biodegradable films that combine these different properties is indeed a challenge that requires different, often highly inconsistent requirements, to be balanced. In fact, although particular standards of mechanical properties and biodegradability can be achieved by using material compositions that share each of the final film properties according to their different characteristics, the achievement of high optical transparency properties is very often specifically hindered by the heterogeneous nature of such compositions. For manufacturers of biodegradable packaging films, this means that they must decide whether to use a film with good mechanical and biodegradability properties and sub-optimal optical transparency properties, or vice versa to make use of aspects associated with the optical properties of the packaging, thus accepting lower performance in terms of mechanical and biodegradability properties.

It is known that, in polymer blends from which highly transparent biodegradable films are obtained, the use of lactic acid polyester (PLA) or one of its esters is particularly important. The use of fluid PLA is necessary as it ensures good film transparency. Unfortunately, sufficiently fluid PLA is not always available on the market, as viscous PLA is easier and cheaper to produce. There is therefore a need to develop a strategy that allows these PLAs to be used in transparent grades, particularly for fruit and vegetables, without compromising their optical properties.

WO 2015/057694 A2 discloses visually clear and low Haze but fast crystallization rates biodegradable film compositions comprising an aromatic/aliphatic polyester and a polylactic acid, methods of making such compositions, and pellets and articles formed from such blends.

CN 112 226 057 discloses a preparation method of a natural mineral modified degradable macromolecular flame-retardant composite material based on a biodegradable polymer comprising 40 parts of PBAT, 30 parts of PLA and 30 parts of a masterbatch comprising melamine.

WO 2013/038770 A1 discloses a film which has improved flexibility and improved tear propagation resistance. The film contains (A) a polylactic acid resin, (B) an aliphatic polyester resin excluding a polylactic acid resin and/or an aliphatic aromatic polyester resin, and (C) a transesterification catalyst and/or a compound derived from a transesterification catalyst.

US 2019/160796 A1 relates to a multilayer biodegradable film which is particularly suitable for the manufacture of packaging and is also characterised by appreciable optical transparency properties in addition to high level mechanical properties.

The Applicant has already found compositions that achieve an excellent balance between optical properties, mechanical properties and high biodegradability. In this respect reference is made to the two patent applications, WO2017216150 and WO2017216158.

However, the fact that the transparency of the film is strongly dependent on the viscosity of the polyester component of the lactic acid is not described. In particular, as the viscosity of the PLA increases, the transparency of the film decreases. In order to obtain a film with good optical properties it is therefore necessary that the PLA should have an optimal fluidity during extrusion of the formulation, i.e. a shear viscosity of less than 600 Pa.s (measured on dried material containing less than 400 ppm water according to ASTM standard D3835 at T = 190°C, shear strain rate = 141.6 s-1, D = 1 mm, L / D = 10).

It has surprisingly been found that in order to obtain a PLA with optimum fluidity for producing highly transparent films it is possible to use a viscous PLA by using, as a fluidising additive, a nitrogen component selected from among:
a nitrogen compound of formula (I) 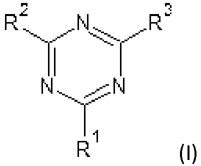
where R1 and R2 may be OH or NH₂, and R3 may be OH, NH₂, C1-C4 alkyl or a
halogen, with the condition that if R1 and R2 are OH, then R3 is also OH;
or a linear amine NH-R4-R5 where R4 is C1-C4 alkyl and R5 is NH₂ or C1-C4 alkyl.

By fluidised lactic acid polyester is meant a lactic acid polyester whose shear viscosity has been reduced by the addition of a nitrogen component, starting from a shear viscosity of between 600 and 1700 Pa.s, preferably between 900 and 1500 Pa.s (measured on dried material containing less than 400 ppm water according to ASTM standard D3835 at T = 190°C, shear strain rate = 141.6 s-1, D = 1 mm, L / D = 10) to a fluid lactic acid polyester. It is therefore one object of the present invention to make a film consisting of a composition including:
i) 65-89% by weight, compared to the sum of the components i.-iv., of at least one polyester comprising:
   a. A dicarboxylic component containing, in relation to the total dicarboxylic component:
      a1) 0-60% in moles of units derived from at least one aromatic dicarboxylic acid;
      a2) 40-100% in moles of units derived from at least one saturated aliphatic dicarboxylic acid;
      a3) 0-5% in moles of units derived from at least one unsaturated aliphatic dicarboxylic acid;
   b. A diol component comprising in relation to the total diol component:
      b1) 95-100% in moles of units derived from at least one saturated aliphatic diol;
      b2) 0-5% in moles of units derived from at least one unsaturated aliphatic diol; and
ii) 10-34.995% by weight, relative to the sum of components i.-iv, of one or more fluidised lactic acid polyesters.
iii) 0.005-1% by weight of the sum of the components i.-iv. of at least one nitrogen component selected from:
   a nitrogen compound of formula (I) 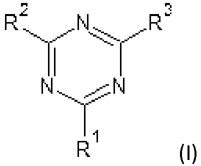
   where R1 and R2 may be OH or NH₂ , and R3 may be OH, NH₂, C1-C4 alkyl or a
   halogen, with the condition that if R1 and R2 are OH, then R3 is also OH;
   or a linear amine NH-R4-R5 where R4 is C1-C4 alkyl and R5 is NH₂ or C1-C4 alkyl.
(iv) 0 - 1% by weight, compared to the sum of components i.-iv, of at least one cross-linking agent and/or chain extender.

In a particularly preferred aspect of the invention, the film consists of a polyester comprising an aromatic aliphatic polyester.

In a preferred aspect of the invention, in light of the results obtained in industrial-scale tests, 1,3,5-triazine-2,4,6-triamine (formula (I) where R1, R2, R3 are NH₂) was selected as the most effective fluidising additive to produce a fluidised lactic acid polyester from viscous PLA. The present invention also relates to packaging of various kinds, in particular bags for transporting goods and bags for food packaging such as bags for food and vegetables comprising said film which may be single-layer or multi-layer. Said multilayer film is also particularly suitable for mulching films.

It is a further object of the present invention to provide a process for preparing a suitable polymer composition for obtaining the above-mentioned film comprising the steps of:
1) mixing:
   (a) 85-99.9% by weight of one or more lactic acid polyesters characterised by a shear viscosity of between 600 and 1700 Pa.s, preferably between 900 and 1500 Pa.s (measured on dried material containing less than 400 ppm water according to ASTM D3835 standard at T = 190°C, shear strain rate = 141.6 s-1, D = 1 mm, L / D = 10) and
   b) 15-0. 1% by weight of at least one nitrogen component iii. selected from:
      a nitrogen compound of formula (I) 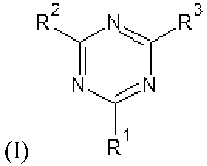
      where R1 and R2 can be OH or NH2, and R3 can be OH, NH2, C1-C4 alkyl or a halogen,
      with the condition that if R1 and R2 are OH, then R3 is also OH;
      or a linear amine NH-R4-R5 where R4 is C1-C4 alkyl and R5 is NH2 or C1-C4 alkyl, obtaining a fluidised lactic acid polyester;
2) mixing said polyester of fluidised lactic acid with at least one polyester i.

Unless otherwise defined, all terms in the art, notations and other scientific terms used herein are intended to have the meanings commonly understood by those skilled in the art to which this description belongs. In some instances, terms with commonly understood meanings are defined herein for clarity and/or ready reference; the inclusion of such definitions in this description should therefore not be construed as representing a substantial difference from what is generally understood in the art.

The terms "comprising", "having", "including" and "containing" are to be understood as open terms (i.e. meaning "including, but not limited to") and are also to be understood as a support for terms such as "to consist essentially of", "consisting essentially of", "to consist of" or "consisting of".

The terms "to consist essentially of", "consisting essentially of" are to be understood as semi-closed terms, meaning that no other ingredients affecting the new features of the invention are included (optional excipients may therefore be included).

The terms "consists of", "consisting of" are to be understood as closed terms.

The use of "for example", "etc.", "or" indicates non-exclusive alternatives without limitation, unless otherwise indicated. The use of "includes" means "includes but not limited to", unless otherwise indicated.

As for component i. of the composition which is the subject matter of the invention, this is present between 65-89% by weight, preferably 70-85% by weight, even more preferably 74-81% by weight of the sum of components i-iv.

The aromatic dicarboxylic acids in component a1 are preferably selected from aromatic dicarboxylic acids of the phthalic acid type, preferably terephthalic acid or isophthalic acid and their esters, salts and mixtures, more preferably terephthalic acid.

In a particularly preferred form, component a1 is terephthalic acid and its esters, salts and mixtures.

The aromatic dicarboxylic acids in component a1 are present between 0-60% in moles, preferably between 40-60% in moles, more preferably between 42-52% in moles, even more preferably between 45-49% in moles relative to the total dicarboxylic component.

The saturated aliphatic dicarboxylic acids in component a2 are preferably selected from saturated C2-C24, preferably C4-C13, more preferably C4-C11 dicarboxylic acids, their C1-C24, preferably C1-C4, alkyl esters, their salts and mixtures thereof. Preferably the saturated aliphatic dicarboxylic acids are selected from succinic acid, 2-ethylsuccinic acid, glutaric acid, 2-methylglutaric acid, adipic acid, pimelic acid, suberic acid, azelaic acid, sebacic acid, undecandioic acid, dodecandioic acid, brassylic acid and their C1-24 alkyl esters. In a preferred embodiment of this invention the saturated aliphatic dicarboxylic acid comprises mixtures comprising at least 50% in moles, preferably more than 60% in moles, more preferably more than 65% in moles, of succinic acid, adipic acid, azelaic acid, sebacic acid, brassylic acid, their C1-C24, preferably C1-C4, alkyl esters and mixtures thereof. In a particularly preferred embodiment, said mixtures comprise or consist of adipic acid and azelaic acid and contain azelaic acid in an amount of between 5 and 65% in moles, more preferably between 10 and 35% in moles, of azelaic acid relative to the sum of adipic acid and azelaic acid. In a further particularly preferred form, when component a1 is 0, component a2 is succinic acid.

The unsaturated aliphatic dicarboxylic acids in component a3 are preferably selected from itaconic acid, fumaric acid, 4-methylene-pimelic acid, 3,4-bis (methylene) nonandioic acid, 5-methylene-nonandioic acid, their C1-C24, preferably C1-C4, alkyl esters, their salts and mixtures thereof. In a preferred embodiment of the present invention, the unsaturated aliphatic dicarboxylic acids comprise mixtures comprising at least 50% by moles, preferably more than 60% by moles, more preferably more than 65% by moles, of itaconic acid and its C1-C24, preferably C1-C4, esters. More preferably the unsaturated aliphatic dicarboxylic acids consist of itaconic acid.

As for the saturated aliphatic diols in component b1, these are preferably selected from 1,2-ethanediol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,4-cyclohexanedimethanol, neopentyl glycol, 2-methyl-1,3-propanediol, dianhydrosorbitol, dianhydromannitol, dianhydroiditol, cyclohexanediol, cyclohexanmethanediol, dialkylene glycols and polyalkylene glycols with molecular weights of 100-4000 such as polyethylene glycol, polypropylene glycol and mixtures thereof. Preferably the diol component comprises at least 50% in moles of one or more diols selected from 1,2-ethanediol, 1,3-propanediol, 1,4-butanediol. More preferably the diol component comprises or consists of 1,4-butanediol. As for the unsaturated aliphatic diols in component b2, these are preferably selected from *cis* 2-buten-1,4-diol, *trans* 2-buten-1,4-diol, 2-butyn-1,4-diol, *cis* 2-penten-1,5-diol, *trans* 2-penten-1,5-diol, 2-pentyn-1,5-diol, *cis* 2-hexen-1,6-diol, *trans* 2-hexen-1,6-diol, 2-hexyn-1,6-diol, *cis* 3-hexen-1,6-diol, *trans* 3-hexen-1,6-diol, 3-hexen-1,6-diol.

The molecular weight Mn of said polyester i. is preferably above 20000, more preferably above 40000. As for the polydispersion index of molecular weights, Mw/Mn, this is preferably between 1.5 and 10, more preferably between 1.6 and 5.0, and even more preferably between 1.8 and 2.7.

The molecular weights Mn and Mw may be measured by gel permeation chromatography (GPC). The determination may be carried out with the chromatographic system maintained at 40 °C, using a set of two columns in series (particle diameter 5 µm and 3 µm with mixed porosity), a refractive index detector, chloroform as eluent (flow rate 0.5 ml/min) and using polystyrene as reference standard.

Preferably, polyester i. has an intrinsic viscosity of more than 0.3 dl/g (measured using an Ubbelohde viscosity meter for solutions of concentration 0.2 g/dl in CHCl3 at 25°C), preferably between 0.3 and 2.0 dl/g, more preferably between 0.4 and 1.2 dl/g.

The terminal acid group content of said polyester i. is preferably less than 100 meq/kg, preferably less than 60 meq/kg and even more preferably less than 40 meq/kg.

The content of terminal acid groups can be measured as known in the art, for example as shown in WO2017216150.

Said polyester i. is biodegradable. In the meaning of the present invention, biodegradable polymer means a polymer that is biodegradable according to EN 13432:2002.

Said polyester i. contained in the film according to the invention can be synthesised according to any of the processes known in the state of the art. In particular, it may advantageously be obtained using a polycondensation reaction.

Advantageously, the process of synthesis may be carried out in the presence of a suitable catalyst. Examples of suitable catalysts include organometallic tin compounds, e.g. stannic acid derivatives, titanium compounds, e.g. orthobutyl titanate, aluminium compounds, e.g. triisopropyl aluminium, antimony, zinc and zirconium compounds and mixtures thereof.

As regards component ii. of the film according to the invention, it comprises from 10 to 34.995% by weight, preferably from 14 to 29.995% by weight, even more preferably from 18 to 25.995% by weight relative to the sum of components i-iv., of one or more fluidised lactic acid polyesters.

In a preferred embodiment, the lactic acid polyesters are selected from the group consisting of poly-L-lactic acid, poly-D-lactic acid, poly-DL-lactic acid stereo complex, copolymers comprising more than 50% by weight of said lactic acid polyesters or mixtures thereof. Particularly preferred are lactic acid polyesters containing at least 95% by weight of repetitive units derived from L-lactic or D-lactic acid or mixtures thereof, having a shear viscosity between 600 and 1700 Pa.s, preferably between 900 and 1500 Pa.s (measured on dried material containing less than 400 ppm water according to ASTM standard D3835 at T = 190°C, shear strain rate = 141.6 s⁻¹, D = 1 mm, L / D = 10).

In a particularly preferred embodiment of the invention, the lactic acid polyester comprises at least 95% by weight of units derived from L-lactic acid, <5% repetitive units derived from D-lactic acid, has a melting point of between 135 and 180°C, a glass transition temperature (Tg) in the range 45-75°C. Commercial examples of lactic acid polyesters with these properties include the biopolymer products Ingeo^{™} 4043D and Ingeo^{™} 4032D.

As for component iii. of the invention, it comprises 0.005 to 1% by weight, preferably 0.005 to 0.1% by weight, even more preferably 0.005% to 0.05% by weight of the sum of components i. to iv., of at least one nitrogen component selected from:
a nitrogen compound of formula (I) 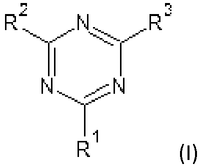
where R1 and R2 may be OH or NH₂, and R3 may be OH, NH₂, C1-C4 alkyl or a
halogen, with the condition that if R1 and R2 are OH, then R3 is also OH;
or a linear amine NH-R4-R5 where R4 is C1-C4 alkyl and R5 is NH₂ or C1-C4 alkyl.

The content of component iii. in the film may be determined using analytical methods known in the art, such as HPLC analysis of an aqueous solution prepared as follows:
- 500 mg sample is placed in a screw-top vial together with 15 mL of 1% HCOOH in water;
- incubation for 1 night in an oven at 70°C;
- 1 mL of aqueous solution is filtered through a 0.2µm RC filter and injected as is into the HPLC;
- The quantity is determined by means of a calibration line obtained by injecting component iii. in a concentration range between 1 µg/ml and 10µg/ml.

Preferably component iii. corresponds to a nitrogen compound of general formula (I) where R1, R2, R3 are NH2 or a derivative thereof.

In the film composition according to the invention there is also present, preferably from 0 to 0.5% by weight, with respect to the sum of components i.-iv., at least one cross-linking agent and/or chain extender to improve stability to hydrolysis (component iv.).

Said crosslinking agent and/or chain extender is selected from di- and/or polyfunctional compounds bearing isocyanate, peroxide, carbodiimide, isocyanurate, oxazoline, epoxy, anhydride or divinyl ether groups or mixtures thereof.

Especially preferred are mixtures of di- and/or polyfunctional compounds bearing isocyanate groups with di- and/or polyfunctional compounds bearing epoxide groups, even more preferably comprising at least 75% w/w of di- and/or polyfunctional compounds bearing isocyanate groups.

Compounds having two and multifunctional groups including isocyanate groups are preferably selected from p-phenylene diisocyanate, 2,4-toluene diisocyanate, 2,6-toluene diisocyanate, 4,4-diphenylmethane-diisocyanate, 1,3-phenylene-4-chlorodiisocyanate, 1,5-naphthalene diisocyanate, 4,4-diphenylene diisocyanate, 3,3'-dimethyl-4,4-diphenylmethane diisocyanate, 3-methyl-4,4'-diphenylmethane diisocyanate, diphenyl ester diisocyanate, 2,4-cyclohexane diisocyanate, 2,3-cyclohexane diisocyanate, 1-methyl 2,4-cyclohexyl diisocyanate, 1-methyl 2,6-cyclohexyl diisocyanate, bis-(isocyanate cyclohexyl) methane, 2,4,6-toluene triisocyanate, 2,4,4-diphenylether triisocyanate, polymethylene-polyphenyl-polyisocyanates, methylene diphenyl diisocyanate, triphenylmethane triisocyanate, 3,3'-dithiolylene-4,4-diisocyanate, 4,4'-methylenebis(2-methylphenyl isocyanate), hexamethylene-1, 3-cyclohexylene diisocyanate, 1,2-cyclohexylene diisocyanate and mixtures thereof. In a preferred embodiment the compound containing isocyanate groups is 4,4-diphenylmethane-diisocyanate.

As regards the di- and polyfunctional compounds bearing peroxide groups, these are preferably selected from benzoyl peroxide, lauroyl peroxide, isononanoyl peroxide, di-(*t*-butylperoxyisopropyl) benzene, *t*-butyl peroxide, dicumyl peroxide, alpha,alpha-di-(*t*-butylperoxy) diisopropylbenzene, 2,5-dimethyl-2,5-di(*t*-butylperoxy) hexane, *t*-butyl cumyl peroxide, di-*t*-butyl peroxide, 2,5-dimethyl-2,5-di(*t*-butylperoxy)hex-3-yne, di(4-*t-*butylcyclohexyl) peroxydicarbonate, dicetyl peroxydicarbonate, dimyristyl peroxydicarbonate, 3,6,9-triethyl-3,6,9-trimethyl-1,4,7-triperoxonane, di(2-ethylhexyl) peroxydicarbonate and mixtures thereof.

The di- and polyfunctional compounds bearing carbodiimide groups which are preferably used in the composition according to the present invention are selected from poly(cyclooctylene carbodiimide), poly(1,4-dimethyleneclohexylene carbodiimide), poly(cyclohexylene carbodiimide), poly(ethylene carbodiimide) poly(butylene carbodiimide), poly(isobutylene carbodiimide), poly(nonylene carbodiimide), poly(dodecylene carbodiimide), poly(neopentylene carbodiimide), poly (l, 4-dimethylene phenylene carbodiimide), poly(2, 2', 6,6'-tetraisopropyldiphenylene carbodiimide) (Stabaxol <^{®}> D), poly (2,4,6-triisopropyl-1, 3-phenylene carbodiimide) (Stabaxol <^{®}> P- 100), poly(2,6-diisopropyl-1,3-phenylene carbodiimide) (Stabaxol <^{®}> P P), poly(tolyl carbodiimide), poly(4,4'-diphenylmethane carbodiimide), poly(3,3'-dimethyl-4,4'-biphenylene carbodiimide), poly(p-phenylene carbodiimide), poly(m-phenylene carbodiimide), poly(3,3'-dimethyl-4,4'-diphenylmethane carbodiimide), poly(naphthylene carbodiimide), poly(isophorone carbodiimide), poly(cumene carbodiimide), p-phenylene bis(ethylcarbodiimide), 1,6-hexamethylene bis(ethylcarbodiimide), 1,8-octamethylene bis(ethylcarbodiimide), 1,10-decamethylene bis(ethylcarbodiimide), 1,12-decamethylene bis(ethylcarbodiimide) and mixtures thereof. Examples of di- and polyfunctional compounds bearing epoxide groups which may be advantageously used in the composition according to the present invention are all polyepoxides from epoxidised oils and/or from styrene-glycidyl ether-methyl methacrylate or glycidyl ether-methyl methacrylate, included in a molecular weight range between 1000 and 10000 and having an epoxide number per molecule of between 1 and 30 and preferably between 5 and 25, the epoxides selected from the group comprising: diethylene glycol diglycidyl ether, polyethylene glycol diglycidyl ether, polyglycerol polyglycidyl ether, 2-epoxybutane, polyglycerol polyglycidyl ether, isoprene diepoxide and cycloaliphatic diepoxides, 1,4-cyclohexanedimethanol diglycidyl ether, glycidyl 2-methylphenyl ether, glycerol propoxylatotriglycolcidyl ether, glycerol propoxylatotriglycolcidyl ether, tetraglycidyl ethers of meta-xylenediamine and diglycidyl ether of bisphenol A and mixtures thereof.

Along with the di- and polyfunctional compounds bearing isocyanate, peroxide, carbodiimide, isocyanurate, oxazoline, epoxide, anhydride and divinyl ether groups such as those described above, catalysts may also be used to increase the reactivity of the reactive groups. In the case of polyepoxides, fatty acid salts and even more preferably calcium and zinc stearates may be used.

In a particularly preferred embodiment of the invention, the crosslinking agent and/or chain extender comprises compounds bearing isocyanate groups, preferably 4,4-diphenylmethane-diisocyanate, and/or compounds bearing carbodiimide groups, and/or bearing epoxide groups, preferably of the styrene - glycidylteremethylmethacrylate type.

As has been stated above, it has been established that film transparency is strongly dependent on the viscosity of the PLA used. In Table 1 below it can be seen that as the shear viscosity increases (less than 600 Pa.s - measured on dried material containing less than 400 ppm water according to ASTM D3835 standard at T = 190°C, shear strain rate = 141.6 s-1, D = 1 mm, L / D = 10), the formulation starts to become opaque.

In an OMC EBV60/36 twin-screw extruder (L/D = 36; diameter 58 mm), operating under the following conditions:
- Screw diameter (D) = 58 mm;
- $L / D = 36 ;$
- Screw rotation = 140 rpm;
- $Temperature profile = 60 - 150 - 180 - 210 x 4 - 150 x 2 ° C ;$
- Throughput: 40 kg/h;
- Vacuum degassing in zone 8 out of 10.
there were mixed:
- 79.90% poly(butylene adipate-co-butylene terephthalate) with a content of 47.3% moles of terephthalic acid in relation to the sum of the total dicarboxylic acids, MFR 4.8g/10min (@ 190 °C, 2.16 kg) and acidity 37 meq/kg
- 19.75% PLA with the characteristics described in Table 1 and 2
- 0.25% styrene-alkylacrylate-glycidylmethacrylate-based random copolymer with Mw 6800 and epoxide number per molecule of 10
- 0.10% erucamide

The resulting compositions were fed to a Ghioldi model blown film machine with a 40mm diameter screw and L/D 30, operating at 64 rpm with a 120-170-170x7°C thermal profile. The film-forming head with a 0.9mm air gap and L/D 12 was set at 170°C. Film forming was carried out with a blowing ratio of 4.5 and a stretching ratio of 14.5. This resulted in a film thickness of 14 µm.

**Table 1**

| Film | Shear viscosity of the PLA used (Pa.s) | Thickness (µm) | T (%) | H (%) | C (%) |
|---|---|---|---|---|---|
| 1 | 219 | 14 | 92 | 10 | 90 |
| 2 | 230 | 14 | 91 | 9 | 95 |
| 3 | 551 | 14 | 90 | 14 | 90 |
| 4 | 776 | 14 | 90 | 32 | 69 |
| 5 | 1239 | 14 | 90 | 73 | 14 |

It has also been established that the transparency of the film depends on the compositional ratio of the mixture of a fluid polylactic and a viscous polylactic.
PLA fluid: Ingeo 3251D polylactic acid [shear viscosity measured on dried material containing less than 400 ppm water according to ASTM D3835 standard at T = 190°C, shear strain rate = 141.6 s-1, D = 1 mm, L / D = 10, equivalent to 219 Pa.s].
Viscous PLA: Ingeo 4043D polylactic acid [shear viscosity measured on dried material containing less than 400 ppm water according to ASTM D3835 standard at T = 190°C,
shear strain rate = 141.6 s-1, D = 1 mm, L / D = 10 , equivalent to 1239 Pa.s].

As may be seen in Table 2, as the percentage of the fluid polylactic component decreases, the transparency of the film decreases.

**Table 2**

| | PLA percentage | | Viscous/fluid PLA ratio | T (%) | H (%) | C (%) |
|---|---|---|---|---|---|---|
| Film | % fluid PLA | % viscous PLA | | | | |
| 1 | 18 | 0 | 0/100 | 91 | 11 | 93 |
| 2 | 14 | 4 | 20/80 | 91 | 16 | 89 |
| 3 | 9 | 9 | 50/50 | 90 | 35 | 63 |
| 4 | 4,5 | 13,5 | 75/25 | 89 | 66 | 22 |
| 5 | 0 | 18 | 100/0 | 90 | 73 | 14 |

There is therefore a need to find ways to improve the optical properties of films starting from viscous PLA, i.e. with a shear viscosity between 600 and 1700 Pa.s (measured on dried material containing less than 400 ppm water according to ASTM standard D3835 at T = 190°C, shear strain rate = 141.6 s-1, D = 1 mm, L/D = 10). Finding additives able to modify the fluidity of PLA in order to obtain films with satisfactory optical properties is not a trivial matter, as can be seen from Table 3.

The starting PLA is characterised by an MFI of 3.6 g/10 min at 190°C, 2.16 kg. Different molecules were added in an OMC EBV60/36 twin-screw extruder (L/D = 36; diameter 58 mm), operating under the following conditions:
• Screw diameter (D) = 58 mm;
• $L / D = 36 ;$
• Screw rotation = 140 rpm;
• $Thermal profile = 60 - 150 - 180 - 210 x 4 - 150 x 2 ° C ;$
• Throughput: 40 kg/h;
• Degassing in vacuum in zone 8 out of 10.

**Table 3**

| Additive | Percentage by weight in input | Final MFI of PLA [g/10' @ 190 °C, 2.16kg]. |
|---|---|---|
| (Re-extrusion) | --- | 4.3 |
| CaL (calcium lactate) | 1% | 5.5 |
| Citric acid | 1% | 12.5 |
| Sorbitol powder | 1% | 6 |
| PEG200 | 2.6% | 10 |
| 6-phenyl-1,3,5-triazine-2,4-diamine | 0.3% | 9.4 |
| 1,3,5-triazine-2,4,6-triamine | 0.3% | 29 |

According to Table 3 only a nitrogen compound of formula (I) like 1,3,5-triazine-2,4,5-triamine works to give a good MFI of PLA. Note that a very similar structure of a nitrogen compound of formula (I) containing a phenyl group in R3 and NH2 in R1 and R2 does not works at all.

The input citric acid additive at 1% w/w results in a PLA with a shear viscosity of 620 Pa.s, while the addition of 0.3% 1,3,5,5-triazine-2,4,6-triamine results in a shear viscosity of 241 Pa.s (both measured on dried material containing less than 400 ppm water according to ASTM standard D3835 at T = 190°C, shear strain rate = 141.6 s-1, D = 1 mm, L / D = 10). With 1,3,5-triazine-2,4,6-triamine it is therefore possible to obtain a PLA with a shear viscosity of less than 600 Pa.s with the addition of concentrations of less than 1%. The fluid PLA thus obtained has a residual content of 1,3,5-triazine-2,4,6-triamine of 0.09% (measured by HPLC according to the method given in the description).

The shelf-life of the fluidised PLA was checked by natural ageing of the stored granule after drying. After 2 months, a change in MFI (measured according to ISO 1133-1 at 190°C and 2.16 kg) of less than 5% compared to the starting value was found. Thus, the PLA has proved to be stable over time once fluidised.

The monolayer film may be produced according to any of the processes known in the art, e.g. film blowing or cast extrusion.

The multilayer film may be produced according to any of the processes known in the art, through for example a coextrusion, coating or laminating process. In a preferred embodiment the film according to the present invention may be obtained by a coextrusion process, preferably associated with a bubble film-forming process.

This makes it particularly suitable for the production of a wide range of items such as packaging of various kinds, in particular bags for the transport of goods and bags for food packaging, such as fruit and vegetable bags, comprising the said multilayer film. It is also particularly suitable for mulching films.

As far as optical properties are concerned (referring to a film thickness of 14 microns), optical transmission values above 90%, more preferably above 91%, Haze (cloudiness) values below 30%, more preferably below 25%, even more preferably below 20%, still more preferably below 15%, and Clarity (sharpness) greater than 70%, more preferably greater than 75%, still more preferably greater than 85%, still more preferably greater than 90% (measured according to ASTM D1003), enable the film according to the present invention to be particularly suitable for the above-mentioned applications.

The film according to the present invention is biodegradable and disintegratable under industrial composting conditions according to EN13432:2002.

Detailed examples of the solution found by the Applicant, which are not to be considered limiting, will be given below.

The invention thus conceived is susceptible of many modifications and variants, all of which fall within the scope of the present invention as set forth in the appended claims.
- Component i: poly(butylene adipate-co-butylene terephthalate) with a terephthalic acid content of 47.3% moles of terephthalic acid in relation to the sum of the total dicarboxylic acids, MFR 4.8g/10min (@ 190 °C, 2.16 kg) and acidity 37 meq/Kg.
- PLA-1: polylactic acid Ingeo 4032D, [shear viscosity measured on dried material containing less than 400 ppm water according to ASTM standard D3835 at T = 190°C, shear strain rate = 141.6 s-1, D = 1 mm, L / D = 10 equals 1428 Pa.s].
- PLA-2: polylactic acid Ingeo 3251D, [shear viscosity measured on dried material containing less than 400 ppm water according to ASTM standard D3835 at T = 190°C, shear strain rate = 141.6 s-1, D = 1 mm, L / D = 10 equals 219 Pa.s].
- Component iii: 1,3,5-triazine-2,4,6-triamine
- Component iv: styrene-alkylacrylate-glycidylmethacrylate-based random copolymer with Mw 6800 and epoxide number per molecule of 10

### EXAMPLE 1 - Film Preparation

In Example 1, the lactic acid polyester was previously blended with component iii in a 99.70% by weight composition of lactic acid polyester PLA-1 with 0.3% of iv under the same conditions as the blends shown in Table 3. The resulting fluidised lactic acid polyester (mixture 1a) was characterised by a shear viscosity of 241 Pa.s measured on dried material containing less than 400 ppm water according to ASTM standard D3835 at T = 190°C, shear strain rate = 141.6 s-1, D = 1 mm, L / D = 10.

In Example 2, the lactic acid polyester was previously blended with component iii in a 90% by weight composition of lactic acid polyester PLA-1 with 10% of iv under the same conditions as the blends shown in Table 3, except for the thermal profile, set at 60-150-160x5-150x2 °C. The fluidised lactic acid polyester obtained (mixture 1b) was characterised by a shear viscosity of 88 Pa.s. measured on dried material containing less than 400 ppm water according to ASTM standard D3835 at T = 190°C, shear strain rate = 141.6 s-1, D = 1 mm, L / D = 10.

Composition Preparation: The compositions described in Table 4 were fed to a twin-screw extruder mod. OMC EBV60/36 (L/D = 36; diameter 58 mm), operating under the following conditions:
Screw diameter (D) = 58 mm;
$L / D = 36 ;$
Screw rotation = 140 rpm;
$Temperature profile = 60 - 150 - 180 - 210 x 4 - 150 x 2 ° C ;$
Capacity: 40 kg/h;
Vacuum degassing in zone 8 out of 10.
Film preparation: The resulting compositions were fed to a Ghioldi model blown film machine with a 40mm diameter screw and L/D 30 operating at 64 rpm with a 120-170-170x7°C thermal profile. The film-forming head with a 0.9mm air gap and L/D 12 was set at 170°C. Film forming was carried out with a blowing ratio of 4.5 and a stretching ratio of 14.5. This resulted in a film thickness of 14 µm.

**Table 4 Composition of mixtures (% by weight)**

| | i | PLA-1 | PLA-2 | Mixture 1a | Mixture 1b | iv |
|---|---|---|---|---|---|---|
| Example 1 | 79.60 | - | - | 20 | - | 0.25 |
| Example 2 | 79.60 | 18.45 | - | - | 0.55 | 0.25 |
| Comparison 1 | 79.75 | 20 | - | - | - | 0.25 |
| Comparison 2 | 79.75 | - | 20 | - | - | 0.25 |

In Table 4 we show a viscous lactic acid polyester (PLA-1) and a fluid lactic acid polyester (PLA-2). The viscous lactic acid polyester is combined with two different mixtures containing a nitrogen compound of formula (I).

**Table 5 Results of optical properties**

| | OPTICAL PROPERTIES ASTM D1003 | | |
|---|---|---|---|
| | TRANSM. % | HAZ E% | CLARIT Y% |
| Example 1 | 92 | 9 | 96 |
| Example 2 | 91 | 12 | 93 |
| Comparison 1 | 90 | 73 | 14 |
| Comparison 2 | 91 | 11 | 93 |

As can be seen in Table 5 the viscous acid lactic polyester without the presence of a nitrogen compound of formula (I) (PLA-1, Comparison 1) gives very poor optical results. Instead, the viscous acid lactic polyester PLA-1 can give good optical results only if combined with a nitrogen compound of formula (I) (Example 1 and Example 2). The Comparison 2 with a fluid acid lactic polyester without a nitrogen compound of formula (I) represents the result to be achieved.

HPLC analysis by the method specified in the description showed a 1,3,5-triazine-2,4,6-triamine concentration of 0.007% w/w in the film corresponding to Example 1 and 0.022% w/w in the film corresponding to Example 2.

### Example 3 (comparison)

An amide wax, such as erucamide (C₂₂H₄₃NO, a primary fatty amide resulting from the formal condensation of the carboxy group of erucic acid with ammonia) does not enable to obtain a fluidised lactic acid polyester starting from a lactic acid polyester characterized by a shear viscosity between 600 and 1700 Pa.s. In particular, starting from a lactic acid polyester characterized by a shear viscosity of 1239Pa.s, by adding by extrusion 0.5% w/w of erucammide results in a lactic acid polyester with a shear viscosity of 1044 Pas, while adding by extrusion 1% w/w of erucammide results in a lactic acid polyester with a shear viscosity of 948 Pas. The shear viscosity values obtained are far above 600 Pa.s, so the lactic acid polyester cannot be considered fluidised. The shear viscosity is measured on dried material containing less than 400 ppm water according to ASTM standard D3835 at T = 190°C, shear strain rate = 141.6 s-1, D = 1 mm, L / D = 10. The twin-screw operating conditions correspond to those reported in the compounds described in Table 3.

## Claims

1. Film consisting of a polymer composition comprising:
i) 65-89% by weight, compared to the sum of components i.-iv., of at least one polyester comprising:
a. a dicarboxylic component containing with respect to the total dicarboxylic component:
a1) 0-60% in moles of units derived from at least one aromatic dicarboxylic acid;
a2) 40-100% in moles of units derived from at least one saturated aliphatic dicarboxylic acid;
a3) 0-5% in moles of units derived from at least one unsaturated aliphatic dicarboxylic acid;
b. a diol component comprising with respect to the total diol component:
b1) 95-100% in moles of units derived from at least one saturated aliphatic diol;
b2) 0-5% in moles of units derived from at least one unsaturated aliphatic diol; and
ii) 10-34.995% by weight, relative to the sum of components i.-iv, of one or more fluidised lactic acid polyester having a shear viscosity of less than 600 Pa.s, measured on dried material containing less than 400 ppm water according to ASTM standard D3835 at T = 190°C, shear strain rate = 141.6 s-1, D = 1 mm, L / D = 10, wherein said fluidised lactic acid polyester having a shear viscosity of less than 600 Pa is obtained starting from a lactic acid polyester having a shear viscosity from 600 to 1700 Pa.s and reducing it by addition of a nitrogen component iii.);
iii) 0.005-1% by weight of the sum of the components i.-iv. of at least one nitrogen component selected from:
a nitrogen compound of formula (I) 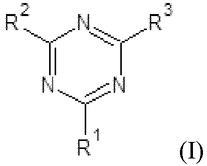
where R1 and R2 may be OH or NH₂, and R3 may be OH, NH₂, C1-C4 alkyl or a
halogen, with the condition that if R1 and R2 are OH, then R3 is also OH;
or a linear amine NH-R4-R5 where R4 is C1-C4 alkyl and R5 is NH₂ or C1-C4 alkyl.
(iv) 0 - 1% by weight, compared to the sum of components i.-iv, of at least one cross-linking agent and/or chain extender.

2. Film according to claim 1, in which the aromatic dicarboxylic acids in component a1) are preferably selected from aromatic dicarboxylic acids of the phthalic acid type, preferably terephthalic acid or isophthalic acid, more preferably terephthalic acid, their esters, salts and mixtures.

3. Film according to any one of the preceding claims, in which the saturated aliphatic dicarboxylic acids in component a2) are preferably selected from saturated C2-C24, preferably C4-C13, more preferably C4-C11 dicarboxylic acids, their C1-C24, more preferably C1-C4, alkyl esters, their salts and mixtures thereof.

4. Film according to claim 3, in which the saturated aliphatic dicarboxylic acids in component a2) are selected from succinic acid, 2-ethylsuccinic acid, glutaric acid, 2-methylglutaric acid, adipic acid, pimelic acid, suberic acid, azelaic acid, sebacic acid, undecanedioic acid, dodecanedioic acid, brassylic acid and their C1-24 alkyl esters.

5. Film according to claim 3, in which the saturated aliphatic dicarboxylic acid comprises mixtures comprising at least 50% in moles, preferably more than 60% in moles, more preferably more than 65% in moles, of succinic acid, adipic acid, azelaic acid, sebacic acid, brassylic acid, their C1-C24, preferably C1-C4, alkyl esters, their salts and mixtures thereof.

6. Film according to claim 3, in which the mixtures of saturated carboxylic acids comprise or consist of adipic acid and azelaic acid and contain azelaic acid in an amount of between 5 and 65% in moles, more preferably between 10 and 35% in moles of azelaic acid relative to the sum of adipic acid and azelaic acid.

7. Film according to claim 3, in which when component a1) is equal to 0, the dicarboxylic acid a2) is succinic acid.

8. Film according to claim 1, in which the nitrogen component (iii) is the product of general formula (I) in which R1, R2, R3 are NH₂ or a derivative thereof.

9. Film according to claim 1, in which component iv comprises at least one di- and/or polyfunctional compound bearing isocyanate, peroxide, carbodiimide, isocyanurate, oxazoline, epoxide, anhydride, divinyl ether groups and mixtures thereof.

10. Packaging comprising the film according to any one of the preceding claims.

11. Packaging according to claim 10 selected from bags for transporting goods and bags for food packaging such as bags for fruit and vegetables.

12. A process for preparing a polymer composition suitable for obtaining the film of claim 1 comprising the steps of
1) mixing:
a) 85-99.9% by weight of one or more lactic acid polyesters **characterised by** a shear viscosity of between 600 and 1700 Pa.s, preferably between 900 and 1500 Pa.s (measured on dried material containing less than 400 ppm water according to ASTM standard D3835 at T = 190°C, shear rate = 141.6 s-1, D = 1 mm, L / D = 10) and
b) 15-0.1% by weight of at least one nitrogen component iii selected from:
a nitrogen compound of formula (I) 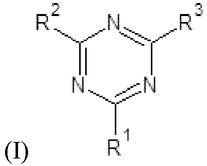
where R1 and R2 may be OH or NH2, and R3 may be OH, NH2, C1-C4 alkyl or a
halogen, with the condition that if R1 and R2 are OH, then R3 is also OH;
or a linear amine NH-R4-R5 where R4 is C1-C4 alkyl and R5 is NH2 or C1-C4 alkyl,
obtaining a fluidised lactic acid polyester having a shear viscosity of less than 600 Pa.s;
2) mixing said polyester of fluidised lactic acid with at least one polyester i.

13. Process according to claim 12, further **characterised in that** in step 1 the content of nitrogen component iii. is between 1 and 15% by weight, and the mixture in step 2 further comprises one or more lactic acid polyesters **characterised by** a shear viscosity between 600 and 1700 Pa.s, preferably between 900 and 1500 Pa.s (measured on dried material containing less than 400 ppm water according to ASTM standard D3835 at T = 190°C, shear strain rate = 141.6 s-1, D = 1 mm, L / D = 10).

## Patentansprüche

1. Folie, bestehend aus einer Polymerzusammensetzung, die umfasst:
i) 65-68 Gew.%, verglichen zur Summe der Komponenten i.-iv., mindestens eines Polyesters, umfassend:
a. eine Dicarboxylkomponente, die, in Bezug auf die gesamte Dicarboxylkomponente, enthält:
a1) 0-60 Mol% Einheiten, die von mindestens einer aromatischen Dicarbonsäure abgeleitet sind;
a2) 40-100 Mol% Einheiten, die von mindestens einer gesättigten aliphatischen Dicarbonsäure abgeleitet sind;
a3) 0-5% Mol% Einheiten, die von mindestens einer ungesättigten aliphatischen Dicarbonsäure abgeleitet sind;
b. eine Diolkomponente, die, in Bezug auf die gesamte Diolkomponente, umfasst:
b1) 95-100 Mol% Einheiten, die von mindestens einem gesättigten aliphatischen Diol abgeleitet sind;
b2) 0-5 Mol% Einheiten, die von mindestens einem ungesättigten aliphatischen Diol abgeleitet sind; und
ii) 10-34,995 Gew.%, relativ zur Summe der Komponenten i.-iv, einer oder mehrerer verflüssigter Milchsäurepolyester mit einer Scherviskosität von weniger als 600 Pa.s, gemessen an getrocknetem Material, das weniger als 400 ppm Wasser enthält, gemäß ASTM Standard D3835 bei T = 190°C, Scherverformungsrate = 141,6 s-1, D = 1 mm, L/D = 10, worin der verflüssigte Milchsäurepolyester mit einer Scherviskosität von weniger als 600 Pa ausgehend von einem Milchsäurepolyester mit einer Scherviskosität von 600 bis 1700 Pa·s und Reduzieren von diesem durch Zugabe einer Stickstoffkomponente iii.) erhalten wird;
iii) 0,005-1 Gew.% der Summe der Komponenten i.-iv. mindestens einer Stickstoffkomponente, ausgewählt aus:
einer Stickstoffverbindung der Formel (I) 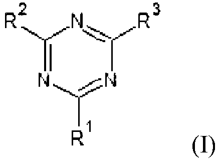
wobei R1 und R2 OH oder NH₂ sein können, und R3 OH, NH₂, C1-C4-Alkyl oder ein Halogen sein kann, mit der Bedingung, dass R3 auch OH ist, wenn R1 und R2 OH sind;
oder ein lineares Amin NH-R4-R5, wobei R4 C1-C4-Alkyl ist und R5 NH₂ oder C1-C4-Alkyl ist;
(iv) 0-1 Gew.%, verglichen zur Summe der Komponenten i.-iv, mindestens eines Vernetzungsmittels und/oder Kettenverlängerers.

2. Folie gemäß Anspruch 1, in der die aromatischen Dicarbonsäuren in Komponente a1) vorzugsweise ausgewählt sind aus aromatischen Dicarbonsäuren vom Phthalsäuretyp, vorzugsweise Terephthalsäure oder Isophthalsäure, bevorzugter Terephthalsäure, deren Ester, Salzen und Gemischen.

3. Folie gemäß einem der vorhergehenden Ansprüche, in der die gesättigten aliphatischen Dicarbonsäuren in Komponente a2) vorzugsweise ausgewählt sind aus gesättigten C2-C24-, vorzugsweise C4-C13-, bevorzugter C4-C11-Dicarbonsäuren, deren C1-C24-, bevorzugter C1-C4-Alkylestern, deren Salzen und Gemischen davon.

4. Folie gemäß Anspruch 3, in der die gesättigten aliphatischen Dicarbonsäuren in Komponente a2) ausgewählt sind aus Bernsteinsäure, 2-Ethylbernsteinsäure, Glutarsäure, 2-Methylglutarsäure, Adipinsäure, Pimelinsäure, Korksäure, Azelainsäure, Sebacinsäure, Undecandisäure, Dodecandisäure, Brassylsäure und deren C1-24-Alkylestern.

5. Folie gemäß Anspruch 3, in der die gesättigte aliphatische Dicarbonsäure Gemische umfasst, umfassend mindestens 50 Mol%, vorzugsweise mehr als 60 Mol%, bevorzugter mehr als 65 Mol%, Bernsteinsäure, Adipinsäure, Azelainsäure, Sebacinsäure, Brassylsäure, deren C1-C24-, vorzugsweise C1-C4-Alkylester, deren Salze und Gemische davon.

6. Folie gemäß Anspruch 3, in der die Gemische der gesättigten Carbonsäuren Adipinsäure und Azelainsäure umfassen oder daraus bestehen und Azelainsäure in einer Menge zwischen 5 bis 65 Mol%, bevorzugter zwischen 10 und 35 Mol% Azelainsäure, relativ zur Summe an Adipinsäure und Azelain, enthalten.

7. Folie gemäß Anspruch 3, in der die Komponente a1) gleich 0 ist, die Dicarbonsäure a2) Bernsteinsäure ist.

8. Folie gemäß Anspruch 1, in der die Stickstoffkomponente (iii) das Produkt der allgemeinen Formel (I), in der R1, R2, R3 NH₂ sind, oder ein Derivat davon ist.

9. Folie gemäß Anspruch 1, in der die Komponente iv mindestens eine di- und/oder polyfunktionale Verbindung umfasst, die Isocyanat-, Peroxid-, Carbodiimid-, Isocyanurat-, Oxazolin-, Epoxid-, Anhydrid-, Divinylethergruppen und Gemische davon trägt.

10. Verpackung, umfassend die Folie gemäß einem der vorhergehenden Ansprüche.

11. Verpackung gemäß Anspruch 10, ausgewählt aus Beuteln für den Warentransport und Beuteln für Lebensmittelverpackungen wie Beuteln für Obst und Gemüse.

12. Verfahren zur Herstellung einer Polymerzusammensetzung, die zur Gewinnung des Films von Anspruch 1 geeignet ist, umfassend die folgenden Schritte:
1) das Mischen von:
a) 85-99,9 Gew.% einer oder mehrerer Milchsäurepolyester, **gekennzeichnet durch** eine Scherviskosität zwischen 600 und 1700 Pa.s, vorzugsweise zwischen 900 und 1500 Pa.s (gemessen an bei getrocknetem Material, das weniger als 400 ppm Wasser enthält, gemäß ASTM Standard D3835 bei T = 190°C, Scherrate = 141,6 s-1, D = 1 mm, L/D = 10) und
b) 15-0,1 Gew.% mindestens einer Stickstoffkomponente iii, ausgewählt aus:
einer Stickstoffverbindung der Formel (I) 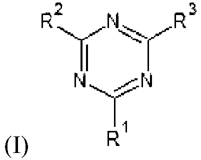
wobei R1 und R2 OH oder NH2 sein können und R3 OH, NH2, C1-C4-Alkyl oder ein Halogen sein kann, mit der Bedingung, dass R3 auch OH ist, wenn R1 und R2 OH sind,
oder ein lineares Amin NH-R4-R5, wobei R4 C1-C4-Alkyl ist und R5 NH2 oder C1-C4-Alkyl ist,
um einen verflüssigten Milchsäurepolyester mit einer Scherviskosität von weniger als 600 Pa.s zu erhalten;
2) das Mischen dieses Polyesters verflüssigter Milchsäure mit mindestens einem Polyester i.

13. Verfahren gemäß Anspruch 12, ferner **dadurch gekennzeichnet, dass** in Schritt 1 der Gehalt der Stickstoffkomponente iii. zwischen 1 und 15 Gew.% liegt und das Gemisch in Schritt 2 ferner einen oder mehrere Milchsäurepolyester umfasst, **gekennzeichnet durch** eine Scherviskosität zwischen 600 und 1700 Pa.s, vorzugsweise zwischen 900 und 1500 Pa.S (gemessen an getrocknetem Material, das weniger als 400 ppm Wasser enthält, gemäß ASTM Standard D3835 bei T = 190°C, Scherverformungsrate = 141,6 s-1, D = 1 mm, L/D = 10).

## Revendications

1. Film constitué d'une composition de polymère comprenant :
i) 65 à 89 % en poids, par comparaison à la somme des composants i.-iv., d'au moins un polyester comprenant :
a. un composant dicarboxylique contenant par rapport au composant dicarboxylique total :
a1) 0 à 60 % en moles d'unités issues d'au moins un acide dicarboxylique aromatique ;
a2) 40 à 100 % en moles d'unités issues d'au moins un acide dicarboxylique aliphatique saturé ;
a3) 0 à 5 % en moles d'unités issues d'au moins un acide dicarboxylique aliphatique insaturé ;
b. un composant diol comprenant par rapport au composant diol total :
b1) 95 à 100 % en moles d'unités issues d'au moins un diol aliphatique saturé ;
b2) 0 à 5 % en moles d'unités issues d'au moins un diol aliphatique insaturé ; et
ii) 10 à 34,995 % en poids, par rapport à la somme des composants i.-iv, d'un ou plusieurs polyesters d'acide lactique fluidisé ayant une viscosité de cisaillement inférieure à 600 Pa.s, mesurée sur matière séchée contenant moins de 400 ppm d'eau selon la norme ASTM D3835 à T = 190 °C, vitesse de déformation de cisaillement = 141,6 s-1, D = 1 mm, L / D = 10, dans lequel ledit polyester d'acide lactique fluidisé ayant une viscosité de cisaillement inférieure à 600 Pa est obtenu à partir d'un polyester d'acide lactique ayant une viscosité de cisaillement de 600 à 1 700 Pa.s et en le réduisant par ajout d'un composant azoté iii.) ;
iii) 0,005 à 1 % en poids de la somme des composants i.-iv. d'au moins un composant azoté choisi parmi :
un composé azoté de formule (I) 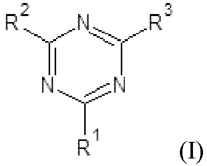
où R1 et R2 peuvent être OH ou NH₂, et R3 peut être OH, NH₂, alkyle en C1-C4 ou un halogène, à la condition que si R1 et R2 sont OH alors R3 est aussi OH ;
ou une amine linéaire NH-R4-R5 où R4 est alkyle en C1-C4 et R5 est NH₂ ou alkyle en C1-C4.
(iv) 0 à 1 % en poids, par comparaison à la somme des composants i.-iv, d'au moins un agent de réticulation et/ou extenseur de chaîne.

2. Film selon la revendication 1, dans lequel les acides dicarboxyliques aromatiques dans le composant a1) sont de préférence choisis parmi les acides dicarboxyliques aromatiques du type acide phtalique, préférablement l'acide téréphtalique ou l'acide isophtalique, plus préférablement l'acide téréphtalique, leurs esters, leurs sels et leurs mélanges.

3. Film selon l'une quelconque des revendications précédentes, dans lequel les acides dicarboxyliques aliphatiques saturés dans le composant a2) sont préférablement choisis parmi les acides dicarboxyliques saturés en C2-C24, préférablement en C4-C13, plus préférablement en C4-C11, leurs esters d'alkyle en C1-C24, plus préférablement en C1-C4, leurs sels et des mélanges correspondants.

4. Film selon la revendication 3, dans lequel les acides dicarboxyliques aliphatiques saturés dans le composant a2) sont choisis parmi l'acide succinique, l'acide 2-éthylsuccinique, l'acide glutarique, l'acide 2-méthylglutarique, l'acide adipique, l'acide pimélique, l'acide subérique, l'acide azélaïque, l'acide sébacique, l'acide undécanedioïque, l'acide dodécanedioïque, l'acide brassylique et leurs esters d'alkyle en C1-C24.

5. Film selon la revendication 3, dans lequel l'acide dicarboxylique aliphatique saturé comprend des mélanges comprenant au moins 50 % en moles, préférablement plus de 60 % en moles, plus préférablement plus de 65 % en moles, d'acide succinique, acide adipique, acide azélaïque, acide sébacique, acide brassylique, leurs esters d'alkyle en C1-C24, préférablement en C1-C4, leurs sels et des mélanges correspondants.

6. Film selon la revendication 3, dans lequel les mélanges d'acides carboxyliques saturés comprennent ou sont constitués d'acide adipique et d'acide azélaïque et contiennent de l'acide azélaïque en une quantité comprise entre 5 et 65 % en moles, plus préférablement entre 10 et 35 % en moles d'acide azélaïque par rapport à la somme d'acide adipique et d'acide azélaïque.

7. Film selon la revendication 3, dans lequel lorsque le composant a1) est égal à 0, l'acide dicarboxylique a2) est l'acide succinique.

8. Film selon la revendication 1, dans lequel le composant azoté (iii) est le produit de formule générale (I) dans laquelle R1, R2, R3 sont NH₂ ou un dérivé correspondant.

9. Film selon la revendication 1, dans lequel le composant iv comprend au moins un composé di- et/ou polyfonctionnel portant des groupes isocyanate, peroxyde, carbodiimide, isocyanurate, oxazoline, époxyde, anhydride, éther de divinyle et des mélanges correspondants.

10. Emballage comprenant le film selon l'une quelconque des revendications précédentes.

11. Emballage selon la revendication 10 choisi parmi des sacs pour le transport de marchandises et des sacs pour emballage alimentaire tels que des sacs pour fruits et légumes.

12. Procédé pour préparer une composition de polymère appropriée pour obtenir le film de la revendication 1, comprenant les étapes de
1) mélange de :
a) 85 à 99,9 % en poids d'un ou plusieurs polyesters d'acide lactique **caractérisés par** une viscosité de cisaillement comprise entre 600 et 1 700 Pa.s, préférablement entre 900 et 1 500 Pa.s (mesurée sur matière séchée contenant moins de 400 ppm d'eau selon la norme ASTM D3835 à T = 190 °C, vitesse de cisaillement = 141,6 s-1, D = 1 mm, L / D = 10) et
b) 15 à 0,1 % en poids d'au moins un composant azoté iii choisi parmi :
un composé azoté de formule (I) 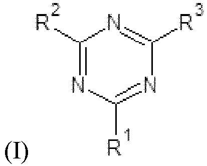
où R1 et R2 peuvent être OH ou NH2, et R3 peut être OH, NH2, alkyle en C1-C4 ou un halogène, à la condition que si R1 et R2 sont OH alors R3 est aussi OH ;
ou une amine linéaire NH-R4-R5 où R4 est alkyle en C1-C4 et R5 est NH2 ou alkyle en C1-C4, obtenant un polyester d'acide lactique fluidisé possédant une viscosité de cisaillement inférieure à 600 Pa.s ;
2) mélange dudit polyester d'acide lactique fluidisé avec au moins un polyester i.

13. Procédé selon la revendication 12, **caractérisé en outre en ce qu'**à l'étape 1 la teneur en composant azoté iii. est comprise entre 1 et 15 % en poids, et le mélange à l'étape 2 comprend en outre un ou plusieurs polyesters d'acide lactique **caractérisés par** une viscosité de cisaillement comprise entre 600 et 1 700 Pa.s, préférablement entre 900 et 1 500 Pa.s (mesurée sur matière séchée contenant moins de 400 ppm d'eau selon la norme ASTM D3835 à T = 190 °C, vitesse de déformation de cisaillement = 141,6 s-1, D = 1 mm, L / D = 10).
